# EUROPEAN PATENT APPLICATION

(11) **EP 2 863 511 A1**
(43) Date of publication of application: **22.04.2015**
(21) Application number: 13189174.9
(22) Date of filing: 17.10.2013
(51) Int. Cl.: H02J 3/18, H02J 3/38

(54) **Compensation of reactive power at a subsea AC transmission cable having an off-shore input end and an on-shore output end**

(71) Applicant: Siemens Aktiengesellschaft, 80333 München (DE)
(72) Inventor: Moeller, Jesper, 6700 Esbjerg (DK); Thisted, Jan, 8830 Tjele (DK)

(57) **Abstract**

It is described a transmission system (100) and a method for transmitting electrical power which has been produced by at least one off-shore wind turbine (160) to a utility grid (190) being located on-shore. The transmission system (100) comprises (a) an off-shore transformer (110), which is connectable to the at least one wind turbine (160) and which is configured for changing a first AC voltage level provided by the at least one wind turbine (160) to a second AC voltage level, (b) a subsea AC transmission cable (120) having an off-shore input end and an on-shore output end, wherein the input end is connected to the off-shore transformer (110), and (c) a compensation (140) unit for compensating at least partially a reactive power being produced within the subsea AC transmission cable (120), wherein the compensation unit (160) is electrically coupled to the subsea AC transmission cable (120) at a node being located in between the off-shore input end and the on-shore output end.

## Description

### Field of invention

The present invention relates to the technical field of connecting a wind farm comprising at least one wind turbine being erected off-shore to a utility grid being located on-shore. Specifically, the present invention relates to a transmission system and to a method for transmitting electrical power which has been produced by at least one off-shore wind turbine to a utility grid being located on-shore.

### Art Background

Electric power which has been generated by an off-shore wind farm is transmitted to an on-shore utility grid by either AC or DC transmission lines to shore. For shorter distances typically AC transmission is used but AC cables are affected by capacitive charging which limits the length that can be realistically used to about maybe 100 km.

From the publication "Grid Connection and Remote Control for the Horns Rev 150 MW Offshore Wind Farm in Denmark" by Peter Christiansen et al. it is known that the individual wind turbines of a wind farm can be arranged in a plurality of rows, wherein each row consists of a number of serial connected wind turbines. The rows are interconnected at an off-shore transformer sub-station comprising busbars, a transformer and circuit breakers. The off-shore transformer sub-station is positioned on a separate foundation.

Electric power from the individual wind turbines is produced at some specific generator voltage which according to the above-identified publication is transformed in each wind turbine to an intermediate AC voltage level for the transmission of the generated electric power to an off-shore transformer sub-station. Intermediate AC voltage level transmission lines can interconnect the corresponding individual wind turbines in each row and can connect the rows to the off-shore transformer sub-station. The basic task for the off-shore transformer sub-station is to transform the AC power from the concatenated wind turbines from the intermediate AC voltage level to a high AC voltage level. The intermediate AC voltage level may be e.g. 24 kV, the high AC voltage level may be e.g. 150 kV AC.

From the above-identified publication it is further known that due to losses / reactive power production in the subsea AC transmission cables, reactors for compensation are established in connection to the two ends of the subsea AC transmission cable. However, one problem related to a known AC transmission system is that the system-construction still limits the length of AC transmission to approx. 100 km while still keeping an economical advantageous construction compared to a DC transmission concept.

EP 1 071 883 B1 discloses a wind turbine having a generator, a tower, a foundation on which the tower is provided, and a transformer, which is connected to the generator in order to transfer the electrical power that is produced to a utility grid. The weights of the tower, the generator and the transformer are borne solely by the foundation of the wind turbine. The transformer is arranged on a platform which is attached to the outside of the tower.

EP 1 240 426 B1 discloses an off-shore wind turbine having a tower, a rotor head, at least one rotor blade and electric subsystems such as switching equipment and/or a transformer, which are housed in at least one container positioned interchangeably at the outside of the tower of the wind turbine. The container is suspended from a supporting framework structure fitted to the tower. This supporting framework structure contains a cable system for lowering and replacing the container.

WO 2008/039121 A1 discloses a wind farm having a plurality of off-shore wind turbines distributed over an area. Each off-shore wind turbine comprises a generator and a first step-up transformer for raising the voltage of the electric power signal generated by the generator. Each off-shore wind turbine is connected, by means of cables, to a further second step-up transformer connected to a main cable in common to all off-shore wind turbines for transfer of the total power generated by the wind farm to a utility grid being located at a considerable distance to said area. The off-shore wind turbines are interconnected in groups. Each group is connected to a separate second step-up transformer located in the region of the group. Further, each second step-up transformer is connected to the main cable in common to all the off-shore wind turbines. Each one of the second step-up transformers may be arranged in one of the wind turbines belonging to the respective group. The second step-up transformer may be arranged on a column structure of the respective wind turbine or on the foundation supporting this column structure.

There may be a need for improving a transmission of electrical power generated by at least one wind turbine being located off-shore to a utility grid being located on-shore.

### Summary of the Invention

This need may be met by the subject matter according to the independent claims. Advantageous embodiments of the present invention are described by the dependent claims.

According to a first aspect of the invention there is provided a transmission system for transmitting electrical power generated by at least one wind turbine being located off-shore to a utility grid being located on-shore. The provided transmission system comprises (a) an off-shore transformer, which is connectable to the at least one wind turbine and which is configured for changing a first AC voltage level provided by the at least one wind turbine to a second AC voltage level, (b) a subsea AC transmission cable having an off-shore input end and an on-shore output end, wherein the input end is connected to the off-shore transformer, and (c) a compensation unit for compensating at least partially a reactive power being produced within the subsea AC transmission cable, wherein the compensation unit is electrically coupled to the subsea AC transmission cable at a node being located in between the off-shore input end and the on-shore output end.

The described transmission system is based on the idea that by providing a reactive power compensation not at the end portions of the subsea AC transmission cable, which end portions are assigned to the off-shore input end respectively to the on-shore output end, but to a node being located in between the off-shore input end and an on-shore output end, the overall reactive power generation can be compensated in a reliable and effective manner.

The described transmission system may be used for connecting one or more wind turbines to the utility grid. In case there are connected at least two wind turbines these two wind turbines may be connected in series or in parallel with each other. The same holds for the case in which there are connected more than two wind turbines. However, in case of more than two wind turbines being connected to the utility grid the wind turbines may be connected to each other by any combination of serial and/or parallel connections.

For instance, a wind farm may comprise a plurality of wind turbines which are arranged in one or more rows, wherein in each row the wind turbines are connected in series. Thereby, in one row the "last wind turbine" or the foundation of the "last wind turbine" may carry a step-up transformer which transforms the voltage from an intermediate voltage level to a higher voltage level which is used for transmitting the electric power to the shore.

It is commonly known that resistive losses within an electric cable are proportional to the square of the (effective) current of the power signal traveling through the electric cable. Therefore, the off-shore wind transformer may preferably be used for increasing the voltage level of the electric power signal provided by the at least one wind turbine in order to reduce resistive losses within the subsea AC transmission cable. For instance, the off-shore transformer may increase the voltage for a voltage level of 66 kV to 132 kV. However, this is only an example and also other voltage step-ups may be employed.

In case of connecting at least two wind turbines to the utility grid the off-shore transformer may be used as a common transformer for all wind turbines being connected with each other is series and/or in parallel. Preferably, the common off-shore transformer is mounted at a foundation of one of the wind turbines. This may provide the advantage that it is not necessary to build up a separate foundation for the off-shore transformer.

The subsea AC transmission cable may be any electric cable which is able to carry an AC power signal from the off-shore transformer to the on-shore transformer. Thereby, the subsea AC transmission cable may run at least partially under the level of the sea.

According to an embodiment of the invention the node of the subsea AC transmission cable is located in a portion of the subsea AC transmission cable, which portion includes a cable midpoint.

Specifically, by compensating the reactive power which has been generated in particular by the capacitance of the subsea AC transmission cable at a portion which includes the cable midpoint, the maximum lengths of the subsea AC transmission cable can be increased while keeping reactive power within acceptable limits. By contrast to known transmission systems which due to reactive power losses caused by the capacitance of the subsea AC transmission cable must not be longer than approximately 100 km, the subsea AC transmission cable of the described transmission system may be extended up to a length of 150 km or even 200 km, whereby due to the central attachment / coupling of the compensation unit to the subsea AC transmission cable the amount of reactive power generated due to the cable capacitance can be kept within acceptable limits.

According to a further embodiment of the invention the portion of the subsea AC transmission cable has a length which is 40%, in particular 20% and further in particular 10% of a total length of the subsea AC transmission cable. This may provide the advantage that the position of the subsea AC transmission cable, where the compensation unit is attached to, is more or less a central section of the subsea AC transmission cable. As a consequence, the efficiency of the reactive power compensation can be increased.

According to a further embodiment of the invention a portion midpoint of the portion of the subsea AC transmission cable spatially coincides with the cable midpoint. This may provide the advantage that the reactive power compensation can be carried out at this position of the subsea AC transmission cable, which position is closest to the cable midpoint of the subsea AC transmission cable. This may allow for realizing an increased efficiency of the reactive power compensation.

According to a further embodiment of the invention the transmission system further comprises a further compensation unit for compensating at least partially a reactive power being produced within the subsea AC transmission cable. Thereby, the further compensation unit is electrically coupled to the subsea AC transmission cable at a further node being located in between the off-shore input end and the on-shore output end and the further node and the node are spatially spaced apart from each other.

Arranging at least one further compensation unit in between the off-shore input end and the on-shore output end may provide the advantage that along the entire length of the subsea AC transmission cable an effective reactive power compensation may be realized. Thereby, in between the off-shore input end and the on-shore output end the compensation units (i.e. the compensation unit and the at least one further compensation unit may be distributed at least approximately in a uniform manner. In this case along the subsea AC transmission cable the reactive power compensation with a certain number of compensations units will be optimized.

In this respect it is mentioned that "distributed in a uniform manner" may mean the following:
(A) The subsea AC transmission cable is along its entire length divided in a predefined number of cable portions which have approximately the same length.
(B The predefined number is the same as the number of available compensation units.
(C) Each one of the various compensation units is assigned to a certain cable portion.
(D) Each one of the various compensation units is located at least approximately at the midpoint of the respective cable portion.

According to a further embodiment of the invention the subsea AC transmission cable is a three-phase cable. This may provide the advantage that the power signal can be transmitted through the subsea AC transmission cable as a rotating three-phase current.

According to a further embodiment of the invention the compensation unit comprises passive electrical components. This may provide the advantage that no active electric components are needed. Therefore, the compensation unit can be realized exclusively with passive electrical components. As a consequence, the compensation unit can be operated without any external power supply. This makes the realization of the compensation unit in particular approximately midway between the off-shore input end and the on-shore output end comparatively easy.

According to a further embodiment of the invention the compensation unit comprises at least one reactor, wherein an inductance of the at least one reactor is selected depending on the frequency of an AC power signal which can be carried by the subsea AC transmission cable.

Specifically, the at least on reactor which may be connected between different phases of the subsea AC transmission cable may have an inductance that will compensate at least partially the reactive power which is generated by the capacitor effect of the subsea AC transmission cable. For this purpose, the inductances of the reactors may be appropriately selected. This selection may be done by starting with an inductor size that will compensate for the total or a part of the sub-sea AC transmission cable by solving the equation w*L = 1/(w*C) where w is the angular frequency [rad/sec], L is the reactor inductance and C is the capacitance of the total or of a part of the subsea AC transmission cable.

On one end, the at least one reactor may be connected to the subsea AC transmission cable and on another end the reactor may be connected to an earth potential. Depending on the location of the compensation unit the earth potential may be provided by a connector device at the ground of the sea or may be provided by a connector above the sea level.

The frequency of the power signal on the subsea AC transmission cable may be e.g. 16.7 Hz or 50 Hz. However, depending on the specific application the subsea AC transmission cable might also carry power signals with other frequencies. According to a further embodiment of the invention the at least one reactor is connectable and disconnectable from the subsea AC transmission cable. Thereby, depending on the configuration (in particular depending on the amount and/or on the strength of the power transfer through the subsea AC transmission cable) the at least one reactor may be connected to the subsea AC transmission cable, in order to improve the compensation of the reactive power generated in the subsea AC transmission cable. Specifically, if the compensation unit comprises at least two reactors, which may have the same or which may have different inductances, depending on the power transfer through the subsea AC transmission cable selectively one or more of the reactors may be connected to the subsea AC transmission cable in order to realize an optimal reactive power compensation.

Calculations or simulations may be performed in order to determine whether to connect or whether to disconnect a particular reactor from the subsea AC transmission cable. Such calculations or simulations may in particular depend on the size of the power load (i.e. the amount of electric power which is transferred through the subsea AC transmission cable), on the type of the subsea AC transmission cable and/or on the frequency of the power load.

According to a further embodiment of the invention the at least one reactor comprises an active and/or a passive filter.

The active filter may for example be an analog filter or a digital filter. In particular, the analog filter may be adaptive such that a filter band may be adjustable. A passive filter may for example comprise an inductance. Thereby, the transfer of the AC power signal may be improved, in particular by reducing resonance peaks within the subsea AC transmission cable.

According to a further embodiment of the invention the compensation unit is realized as a sub-sea station being located below sea level. This may provide the advantage that in order to connect the compensation unit it is not necessary to raise a part of the subsea AC transmission cable above sea level. The compensation unit can rather be connected to the subsea AC transmission cable at a portion which is located below sea level.

It is pointed out that in case the compensation unit is free of any active electrical components the whole sub-sea station can be realized as a passive sub-sea station which does not need any power supply provided from outside.

According to a further embodiment of the invention the compensation unit is located above sea level. This may mean that the compensation unit is connected to the subsea AC transmission cable at a portion of the subsea AC transmission cable which portion is located or has been raised above sea level. Thereby, the compensation unit may be attached to an appropriate foundation. The foundation may be a natural foundation (e.g. a small island) and/or a man-made (artificial) foundation.

According to a further embodiment of the invention the off-shore transformer is directly or indirectly attached to a foundation of the wind turbine. This may provide the advantage that it is not necessary to build up a separate foundation for the off-shore transformer.

In case the off-shore transformer is directly attached to the foundation of the wind turbine an appropriate platform may be employed in order to ensure for a stable and reliable mechanical support. In case the off-shore transformer is indirectly attached to the foundation there are several different possibilities which allow for an appropriate mounting. For instance the off-shore transformer may be carried by some holding means which are suitable for holding the off-shore transformer. The holding means may be established on or at the tower of the wind turbine or on a transition piece which mechanically connects the tower and the foundation of the wind turbine.

In this respect it is mentioned that apart from the off-shore transformer also some electric switchgear such as e.g. an electric converter may be established on such an appropriate holding means.

Descriptive speaking, when the off-shore transformer and, if applicable also other electric components of the described transmission system, which components are located off-shore, are established on existing wind turbine foundations, towers or transition pieces, the described transmission system can be realized as a cheap and cost effective solution compared to known transmission system.

According to a further embodiment of the invention the transmission system further comprises an on-shore transformer, which is connected to the on-shore output end and which is connectable to the utility grid, wherein the on-shore transformer is configured for changing the second AC voltage level to a third AC voltage level of the utility grid.

The described on-shore transformer may be used for transforming the voltage level of the subsea AC transmission cable to a certain voltage level of the utility grid. Thereby, depending on the voltage level of the subsea AC transmission cable and on the voltage level of the utility grid the on-shore transformer may be a step-up or a step-down transformer. For instance, the on-shore transformer may transform a voltage level of 132 kV (of the subsea AC transmission cable) up to a voltage level of 400 kV (of the utility grid). Again, also these voltage levels are only exemplary and also other voltage step-ups or voltage step-downs may be employed. According to a further aspect of the invention there is provided a method for transmitting electrical power generated by at least one wind turbine being located off-shore to a utility grid being located on-shore via a subsea AC transmission cable having an off-shore input end and an on-shore output end. The provided method comprises (a) changing a first AC voltage level provided by the at least one wind turbine to a second AC voltage level by means of an off-shore transformer being connected (i) at its primary side to the at least one wind turbine and (ii) at its secondary side to an off-shore input end of a subsea AC transmission cable, and (b) compensating at least partially reactive power being produced within the subsea AC transmission cable by means of a compensation unit which is electrically coupled to the subsea AC transmission cable at a node being located in between the off-shore input end and the on-shore output end.

Also the described method is based on the idea that by providing a reactive power compensation to a node being located in between the off-shore input end and an on-shore output end of the subsea AC transmission cable, the overall reactive power generation in particular by the capacitance of the subsea AC transmission cable can be compensated in an effective manner. Thereby, the maximum length of the subsea AC transmission cable can be increased while keeping the overall reactive power within acceptable limits.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the example of embodiment to be described hereinafter and are explained with reference to the example of embodiment. The invention will be described in more detail hereinafter with reference to the example of embodiment but to which the invention is not limited.

### Brief Description of the Drawing

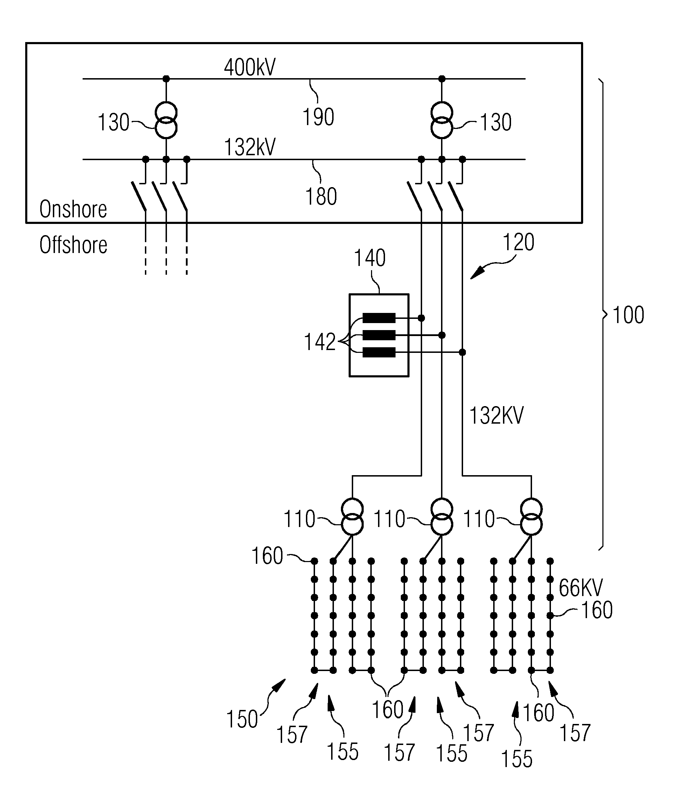

Figure 1 shows in accordance with an embodiment of the invention a transmission system for transmitting electrical power generated by a cluster of wind turbines being located off-shore to a utility grid being located on-shore.

### Detailed Description

Figure 1 shows a transmission system 100 by means of which an off-shore wind farm 150 comprising a plurality of off-shore wind turbines 160 is connected to a utility grid 190.

According to the embodiment described here the off-shore wind farm comprises 84 off-shore wind turbines 160. Respectively 28 of the off-shore wind turbines 160 are clustered to one group 155. As can be seen from Figure 1, each group 155 comprises two parallel connected subgroups 157 each subgroup comprising 14 off-shore wind turbines 160. Within each subgroup 157 the off-shore wind turbines 160 are connected in a serial connection.

It is mentioned that the described configuration of the off-shore wind farm 150 is only exemplary. Without departing from the scope of the invention described in this document also other configurations which may be realized by any arbitrary combination of parallel and series connected off-shore wind turbines 160 may be used.

The transmission system 100 described here comprises three off-shore transformers 110 wherein respectively one off-shore transformer 110 is assigned to each group 155. Each off-shore transformer 110 is mounted directly or indirectly at the foundation of one of the wind turbines 160 of the respective group 155.

In case the off-shore transformer 110 is directly mounted to the foundation of the respective wind turbine 160 a not depicted appropriate platform may be used in order to ensure for a stable and reliable mechanical support of the off-shore transformer 110. In case the off-shore transformer 110 is indirectly attached to the foundation there are several different possibilities which allow for an appropriate mounting of the off-shore transformer 110. For instance the off-shore transformer may be carried by some holding means which are suitable for holding the off-shore transformer. The holding means may be established on or at the tower of the wind turbine 160 or on a transition piece which mechanically connects the tower and the foundation of the wind turbine 160.

Outputs of the off-shore transformers 110 are connected to a three-phase subsea AC transmission cable 120. The three-phase subsea AC transmission cable 120 carries the electric power generated by the off-shore wind farm 150 to an on-shore transformer 130. Via the on-shore transformer 130 the subsea AC transmission cable 120 is connected to the utility grid 190.

Depending in particular on the frequency, on the geometry of the subsea AC transmission cable 120 and on the voltage of the power signal traveling through the subsea AC transmission cable 120 there is generated a reactive power within the sub-sea AC transmission cable 120. Thereby, as known by persons skilled in the art the reactive power generation is due to the finite capacitance of the subsea AC transmission cable 120.

According to the embodiment described here the reactive power generation is compensated at least partially by a compensation unit 140 which is coupled to the subsea AC transmission cable 120 close to the midpoint of the cable 120 which extends between an off-shore input end being located at the off-shore transformer 110 and on on-shore output end being located at the on-shore transformer 130.

As can be seen from Figure 1 the compensation unit 140 comprises three reactors 142. Each reactor is assigned to one phase of the three phase subsea AC transmission cable 120.

According to the embodiment described here the output voltage of one subgroup 157 of series connected wind turbines 160 is approximately 66 kV. The off-shore transformer 110 raises this voltage to a voltage level of 132 kV. This is the voltage level of the subsea AC transmission cable 120. Last but not least the on-shore transformer 130 further increases the voltage up to a voltage level of 400 kV, which is the voltage level of the utility grid 190. In this respect it is mentioned that the voltage levels depicted in the Figure are just exemplary. Of course, depending on the concrete configuration also other voltage levels may be present at the various nodes of a corresponding transmission system.

It is further mentioned that the on-shore transformer 130 may be optional. This means that in some embodiments of the invention at least a part of the utility grid comprises a voltage level of 132 kV such that there is no need to change the voltage of the power signal arriving from off-shore.

It is mentioned that apart from the depicted wind farm 150 also further not depicted wind farms can be connected to the utility grid 190 by means of a further subsea AC transmission cable extending between a not depicted off-shore transformer and a further on-shore transformer 130. This further subsea AC transmission cable is indicated truncated on the left side if Figure 1.

In case there are connected different wind farms via different subsea AC transmission cables to the utility grid 190 it is also possible to provide a busbar 180 connecting the on-shore output ends of the different subsea AC transmission cables with each other.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A transmission system for transmitting electrical power generated by at least one wind turbine (160) being located off-shore to a utility grid (190) being located on-shore, the transmission system (100) comprising
an off-shore transformer (110), which is connectable to the at least one wind turbine (160) and which is configured for changing a first AC voltage level provided by the at least one wind turbine (160) to a second AC voltage level,
a subsea AC transmission cable (120) having an off-shore input end and an on-shore output end, wherein the input end is connected to the off-shore transformer (110), and
a compensation (140) unit for compensating at least partially a reactive power being produced within the subsea AC transmission cable (120), wherein the compensation unit (160) is electrically coupled to the subsea AC transmission cable (120) at a node being located in between the off-shore input end and the on-shore output end.

2. The transmission system as set forth in the preceding claim, wherein
the node of the subsea AC transmission cable (120) is located in a portion of the subsea AC transmission cable (120), which portion includes a cable midpoint.

3. The transmission system as set forth in the preceding claim, wherein
the portion of the subsea AC transmission cable (120) has a length which is 40%, in particular 20% and further in particular 10% of a total length of the subsea AC transmission cable (120).

4. The transmission system as set forth in any one of the preceding claims, wherein
a portion midpoint of the portion of the subsea AC transmission cable (120) spatially coincides with the cable midpoint.

5. The transmission system as set forth in the preceding claim 1, further comprising
a further compensation unit for compensating at least partially a reactive power being produced within the subsea AC transmission cable (120), wherein the further compensation unit is electrically coupled to the subsea AC transmission cable (120) at a further node being located in between the off-shore input end and the on-shore output end and wherein the further node and the node are spatially spaced apart from each other.

6. The transmission system as set forth in any one of the preceding claims, wherein
the subsea AC transmission cable (120) is a three-phase cable.

7. The transmission system as set forth in any one of the preceding claims, wherein
the compensation unit (140) comprises passive electrical components (142).

8. The transmission system as set forth in any one of the preceding claims, wherein
the compensation unit (140) comprises at least one reactor (142), wherein an inductance of the at least one reactor (142) is selected depending on the frequency of an AC power signal which can be carried by the subsea AC transmission cable (120).

9. The transmission system as set forth in the preceding claim, wherein
the at least one reactor (142) is connectable and disconnectable from the subsea AC transmission cable (140).

10. The transmission system as set forth in any one of the preceding claims 6 to 7, wherein
the at least one reactor (142) comprises an active and/or a passive filter.

11. The transmission system as set forth in any one of the preceding claims 1 to 8, wherein
the compensation unit (140) is realized as a sub-sea station being located below sea level.

12. The transmission system as set forth in any one of the preceding claims 1 to 8, wherein
the compensation unit (140) is located above sea level.

13. The transmission system as set forth in any one of the preceding claims, wherein
the off-shore transformer (110) is directly or indirectly attached to a foundation of the wind turbine (160).

14. The transmission system as set forth in any one of the preceding claims, further comprising
an on-shore transformer (130), which is connected to the on-shore output end and which is connectable to the utility grid (190), wherein the on-shore transformer (130) is configured for changing the second AC voltage level to a third AC voltage level of the utility grid (190).

15. A method for transmitting electrical power generated by at least one wind turbine (160) being located off-shore to a utility grid (190) being located on-shore via a subsea AC transmission cable (120) having an off-shore input end and an on-shore output end, the method comprising
changing a first AC voltage level provided by the at least one wind turbine (160) to a second AC voltage level by means of an off-shore transformer (110) being connected
(i) at its primary side to the at least one wind turbine (160) and
(ii) at its secondary side to the off-shore input end of the subsea AC transmission cable (120), and
compensating at least partially reactive power being produced within the subsea AC transmission cable (120) by means of a compensation unit (140) which is electrically coupled to the subsea AC transmission cable (120) at a node being located in between the off-shore input end and the on-shore output end.
